# EUROPEAN PATENT SPECIFICATION

(11) **EP 3 657 011 B1**
(45) Date of publication and mention of the grant of the patent: **07.09.2022**
(21) Application number: 18832407.3
(22) Date of filing: 13.07.2018
(51) Int. Cl.: F03B 13/26, F03B 17/06, F03G 7/08, F03B 5/00

(54) **VORTEX-INDUCED VIBRATION ENERGY EXTRACTION APPARATUS**
VORRICHTUNG ZUR EXTRAKTION VON WIRBELINDUZIERTER SCHWINGUNGSENERGIE
APPAREIL D'EXTRACTION D'ÉNERGIE VIBRATOIRE INDUITE PAR VORTEX

(30) Priority: 14.07.2017 KR 20170089835; 12.07.2018 KR 20180081262
(43) Date of publication of application: 27.05.2020
(73) Proprietor: Korea Institute of Ocean Science & Technology, Busan 49111 (KR)
(72) Inventor: CHOI, Jong Su, Daejeon 34061 (KR); HONG, Sup, Daejeon 34121 (KR); KIM, Young Shik, Daejeon 35206 (KR); PAIK, Bu Geun, Daejeon 34121 (KR); KIM, Hyung Woo, Sejong 30063 (KR); MIN, Cheon Hong, Sejong 30126 (KR); SUNG, Hong Gun, Daejeon 34070 (KR); PARK, Ji Yong, Daejeon 34191 (KR); LEE, Chang Ho, Daejeon 34225 (KR); KIM, Seong Soon, Daejeon 34200 (KR); CHO, Su Gil, Daejeon 35017 (KR); KIM, Gil Won, Seoul 08339 (KR); JOUNG, Tae Hwan, Daejeon 34049 (KR)
(74) Representative: D Young & Co LLP
(86) International application number: PCT/KR2018/007982
(87) International publication number: WO 2019/013590

(56) References cited:
- WO-A1-2012/019224
- CN-B- 104 061 111
- JP-A- 2011 140 894
- KR-A- 20130 035 105
- KR-A- 20130 059 915
- KR-A- 20130 070 731
- KR-B1- 101 127 565
- KR-B1- 101 734 076
- US-A1- 2013 202 407

## Description

### BACKGROUND OF THE INVENTION

### 1. Field of the invention

The present disclosure relates to a vortex-induced vibration energy extraction device. More specifically, the present disclosure relates to a vortex-induced vibration energy extraction device wherein, when electric energy is extracted from mechanical energy caused by vortex-induced vibration in the upward/downward or leftward/rightward direction resulting from a vortex generated on a surface due to vortex detachment caused by a flow of a tidal current (fluid flow), energy can be extracted adaptively in various flow directions of the fluid, including a tidal current or an ocean current, and the power generation efficiency can be substantially improved as a result of the wake galloping phenomenon.

### 2. Description of the Prior Art

Power generation refers to conversion of mechanical energy, thermal energy, chemical energy, or other type of energy to electric energy. Currently known types of power generation include: thermal power generation which uses fossil fuel as the energy source; hydroelectric power generation which uses potential energy of water; wind power generation which uses kinetic energy of wind; photovoltaic power generation which uses solar heat as the energy source; nuclear power generation which uses nuclear fission; wave power generation which uses waves as the energy source; ocean thermal power generation which uses the temperature difference between depths of ocean currents; tidal power generation which uses the tidal range; and ocean current power generation which uses the tidal range or ocean currents resulting from topographical elements as the energy source.

The thermal power generation and the hydroelectric power generation need huge construction costs, and the thermal power generation involves the problem of environmental contamination caused by fossil energy. The hydroelectric power generation not only changes the ecosystem when an extensive area is immersed in water after dam construction, but also changes the atmosphere in the corresponding area in worse cases (secondary environmental problem).

The wind power generation and the photovoltaic power generation are affected by weather conditions, meaning that the power generation systems cannot run if there is no wind or if the solar radiation energy is blocked.

The nuclear power generation needs huge costs for building facilities to block radiation leakage and for disposing of nuclear waste. Besides various limitations related thereto, there is always a risk that even a single accident may cause a serious environmental disaster.

The wave power generation and the ocean thermal power generation have limited applications because few areas can satisfy the required conditions.

The tidal power generation uses the tidal range resulting from flood and ebb tides, which are governed by gravitational forces from the sun and the moon, and which are also influenced by the difference in the centrifugal force resulting from the rotation of the earth. In order to generate electricity from tidal power, the estuary or bay of an area having a tidal range is blocked by a dam to surround the seawater, and a water-turbine generator is installed to generate electricity by using the water level difference. The tidal power generation is advantageous in that, once the place for generation is determined, the changing sea level can be predicted, and clean energy is obtained. However, the marine environment is heavily affected because a large area is required, and the mudflat is also devastated. The minimum effective head required for plausible energy conversion is about 5m. In other words, the system needs to be installed at a place having a tidal range of at least 5m. In order to obtain a larger efficiency, different sides of the dam need to have a large tidal range.

The ocean current power generation actively uses kinetic energy of ocean currents and converts the same to electric energy. An ocean current power station can be built not only in an area having a large tidal range, but also in an area having a high ocean current speed. Electricity can be generated even if the effective head is smaller than 5m, which is the minimum requirement for tidal power generation.

The ocean current power generation is considered more advantageous than other types of generation systems because electricity can be generated continuously regardless of the changing weather, and no contamination occurs because a clean energy source is used.

Types of ocean current power generation systems include an ocean current power generation system installed inside a breakwater, which has a tunnel formed in the breakwater to as to generate electricity by a generator module in the tunnel; an ocean current power generation system fixed to a seabed, which is fixed to a support fixed to the seabed; and a floating-type ocean current power generation which is attached to a floating body that floats on a seawater surface.

Meanwhile, conventional power generation means include an environment-friendly clean energy extraction device employing vortex-induced vibration (VIV), disclosed in Korean Registered Patent Publication No. 10-1061824 (date of publication: September 5, 2011), and a simple reciprocating pivot rotation-type vortex-induced vibration energy extraction device and a vortex-induced vibration energy extraction using the same, disclosed in Korean Registered Patent Publication No. 10-1284106 (date of publication: July 10, 2013).

The conventional power generation means are installed offshore such that vibrating bodies undergo vortex-induced vibration by means of the flow of tidal current (ocean current), and the resulting mechanical energy is converted to electric energy.

However, the conventional power generation means based on vortex-induced vibration have a problem in that they are configured to operate only by a tidal current (fluid flow) flowing in one direction, making it impossible to utilize mechanical energy resulting from both flood tides and ebb tides in waters having flood and ebb tides.

For example, conventional power generation means based on vortex-induced vibration have a problem in that they are configured to convert mechanical energy to electric energy in the course of vortex-induced vibrations of vibrating bodies by means of a flow in one direction during the flood tide of seawater or during the ebb tide, but the vibrating bodies cannot undergo vortex-induced vibrations by means of seawater (fluid) flowing in the opposite direction to the initial flow direction, making it impossible to efficiently utilize tidal currents in both directions at a location having tidal currents in both directions (flood and ebb tides).

There is another problem in that, although it is possible to cope with a flow direction change (fluid flow direction change) by using yawing and weather vaning, this approach requires an additional device, thereby increasing the costs for manufacturing and repair/maintenance. In other words, a separate direction change device necessary to cope with a flow direction change increases the costs for manufacturing and repair/maintenance.

KR 2013 0035105A teaches a system that generates power by using the flow rate and heat of hot water. The system comprises a power generating system comprising a vortex induction cylinder, supporting columns, a compressive chamber, a cooling unit, and a heating unit. The vortex induction cylinder is vibrated through interaction with a vortex generated by the velocity of hot waste water.

### SUMMARY OF THE INVENTION

The present disclosure has been made in order to solve the above-mentioned problems in the prior art, and an aspect of the present disclosure is to provide a means for enabling a vortex-induced vibration energy extraction device installed offshore to extract energy both through vortex-induced vibration resulting from a flood tide and through vertex-induced vibration resulting from an ebb tide, that is, to extract energy adaptively in various fluid flow directions (for example, bidirectional tidal currents or ocean currents).

Another aspect of the present disclosure is to provide a means including vibrating bodies configured for vortex-induced vibration (or simply referred to as vibrating bodies) and provided to face each other such that, when the vibrating body positioned on the front (upstream) undergoes vortex-induced vibration due to a fluid flow (for example, tidal current or ocean current), the vibrating body positioned on the rear (downstream) also undergoes vortex-induced vibration as a result of the wake galloping phenomenon, thereby substantially improving the power generation efficiency.

Another aspect of the present disclosure is to provide a means capable of efficiently coping with bidirectional tidal currents or other fluid flows in various directions by varying the posture and shape of vibrating bodies of a vortex-induced vibration energy extraction device, or by adopting a vibrating body arrangement structure different from that of the prior art, and capable of stopping or minimizing the vortex-induced vibration of the vibrating bodies during repair or in an emergency.

The present invention provides a vortex-induced vibration energy extraction device including: a pair of vibrating bodies coupled to a support body installed on a seabed such that both ends thereof are coupled to both sides of the support body by shafts, respectively, the vibrating bodies being disposed along a straight line with regard to a flow direction of a fluid; and an energy conversion device provided on the support body so as to convert mechanical energy resulting from vortex-inducted vibration of the vibrating bodies due to the flow of the fluid to electric energy, wherein the vibrating body positioned upstream in the flow direction, with regard to the flow direction of the fluid, is configured to generate mechanical energy through vortex-induced vibration resulting from the flow of the upstream fluid, and the vibrating body positioned downstream in the flow direction is configured to generate mechanical energy through wake galloping caused by a vortex generated behind the vibrating body positioned upstream characterized in that the support body comprises a parked condition maintaining means configured to variably control the angle of the vibrating body with regard to the flow of the fluid, thereby stopping or minimizing the vortex-induced vibration of the vibrating body.

The support body may be coupled to an anchor body including three support blocks disposed at an angle of 120°, or to an anchor body including a monopile, a gravity anchor, or a pile anchor.

A support body between the upstream vibrating body and the downstream vibrating body may have both sides formed in "]"-shapes, thereby forming an avoidance space, such that the fluid that has passed through the upstream vibrating body is not interfered with before acting on the downstream vibrating body.

A support body between the upstream vibrating body and the downstream vibrating body may be formed in the shape of a streamlined thin plate, thereby forming an avoidance portion, such that the fluid that has passed through the upstream vibrating body is not interfered with before acting on the downstream vibrating body.

A tidal current inducing structure may be installed near the support body so as to induce a flow of a fluid, including a tidal current or an ocean current resulting from a flood tide or an ebb tide, in a direction matching with respective vibrating bodies on both sides.

The support body may include a rated power maintaining means configured to variably control the angle of the vibrating body with regard to the flow of the fluid, to variably control the shape of the vibrating body, thereby maintaining rated power, or to stop the vortex-induced vibration of the vibrating body.

The rated power maintaining means may include an actuator having one end coupled to the vibrating body and the other end coupled to the support racks that couple the vibrating body to a shaft so as to push or pull the vibrating body through contracting/extending operations, thereby varying the angle of the vibrating body.

The rated power maintaining means may be configured to vary the cross-sectional shape of the vibrating body and may include: multiple first, second, third, and fourth vibrating body pieces formed by dividing the vibrating body in the longitudinal direction, and disposed such that the vibrating body has a polygonal cross-sectional shape, respective ends of the first, second, third, and fourth vibrating body pieces being axially coupled and connected to each other; a support platform installed in the longitudinal direction inside the first, second, third, and fourth vibrating body pieces; and an actuator unit including first, second, and third shape-changing actuators, wherein respective one ends of the first and second shape-changing actuators are coupled to the inside of the first and second vibrating body pieces, and respective other ends thereof are coupled to the support platform such that the first and second shape-changing actuators extend and contract so as to unfold or fold both sides of the first and second vibrating body pieces; the third shape-changing actuator is configured to contract when the first and second shape-changing actuators extend, thereby pulling the third and fourth vibrating body pieces toward the support platform; and the third shape-changing actuator is configured to extend when the first and second shape-changing actuators contract, thereby pushing the third and fourth vibrating body pieces away from the support platform.

The parked condition maintaining means may include a parking actuator installed on the shaft of the vibrating body inside the support racks so as to vary the angle of the vibrating body, operation of the parking actuator being controlled by a control unit.

The present disclosure is advantageous in that energy can be extracted adaptively in connection with bidirectional tidal currents resulting from flood and ebb tides, or ocean currents moving in various directions, by providing a vortex-induced vibration energy extraction device installed offshore, including vibrating bodies provided on both sides of a support body symmetrically or asymmetrically, respectively, such that energy can be extracted both through vortex-induced vibration resulting from the flood tide and through vortex-induced vibration resulting from the ebb tide.

In addition, the fact that there is no need for a direction change device for coping with a flow direction change makes it possible to reduce costs for manufacturing and repair/maintenance.

In addition, two vibrating bodies are disposed along a straight line with regard to the fluid flow direction such that the vibrating body positioned on the front and the vibrating body positioned on the rear can simultaneously undergo vortex-induced vibrations by means of a fluid flowing in one direction (tidal current), thereby substantially improving the power generation efficiency. That is, the vibrating body positioned upstream in the flow direction, with regard to the fluid flow direction, generates mechanical energy through vortex-induced vibration caused by the upstream fluid flow, and the vibrating body positioned downstream in the flow direction generates mechanical energy as a result of wake galloping caused by a vortex generated behind the vibrating body positioned upstream, thereby substantially improving the power generation efficiency.

### BRIEF DESCRIPTION OF THE DRAWINGS

The above and other aspects, features and advantages of the present disclosure will be more apparent from the following detailed description taken in conjunction with the accompanying drawings, in which:
FIG. 1 is a perspective view illustrating a vortex-induced vibration energy extraction device according to the first embodiment of the present invention
FIG. 2 is a perspective view illustrating another embodiment of the anchor body illustrated in FIG. 1;
FIG. 3 is a top view for descripting the operation of the vortex-induced vibration energy extraction device illustrated in FIG. 1;
FIG. 4 is a front view of the vortex-induced vibration energy extraction device illustrated in FIG. 1;
FIG. 5 is a schematic top view for describing wake galloping that occurs in the vortex-induced vibration energy extraction device illustrated in FIG. 1;
FIG. 6 is a schematic top view for describing a vortex-induced vibration energy extraction device according to the second embodiment of the present invention;
FIG. 7 is a schematic top view for describing a vortex-induced vibration energy extraction device according to the third embodiment of the present invention;
FIG. 8 and FIG. 9 are front views illustrating a vortex-induced vibration energy extraction device according to the fourth embodiment which does not form part of the present invention;
FIG. 10 and FIG. 11 illustrate a vortex-induced vibration energy extraction device according to the fifth embodiment of the present invention, and, specifically, FIG. 10 and FIG. 11 are a perspective view and a schematic top view illustrating a vortex-induced vibration energy extraction device having a rated power maintaining means such that the angle of vibrating bodies is varied by actuators;
FIG. 12 and FIG. 13 are schematic front views illustrating a vortex-induced vibration energy extraction device according to the sixth embodiment of the present invention, which has a rated power maintaining means, wherein the cross section of the vibrating body is varied by multiple actuator units;
FIG. 14 is a schematic top view illustrating a vortex-induced vibration energy extraction device according to the seventh embodiment of the present invention;
FIG. 15 is a schematic perspective view illustrating a vortex-induced vibration energy extraction device according to the eighth embodiment of the present invention;
FIG. 16 is a schematic block diagram for describing an energy conversion process of a vortex-induced vibration energy extraction device according to the present
invention; and
FIG. 17 is a perspective view for describing a function for maintaining an operating unit in a parked condition by varying the angle of the vibrating body illustrated in FIG. 1.

### Brief Description of Reference Numerals regarding

### Major Parts in the Drawings

10: vortex-induced vibration energy extraction device
20: anchor body
30: power generation means
40: support body
50, 50A, 50B: operating units
52: support rack
54, 54A, 54B: vibrating bodies
60: rated power maintaining means
62: actuator
64: support platform
66: actuator unit
70: tidal current inducing structure
80: direction change member
A, B: tidal currents
FL: fluid flow direction
C: control unit
FL1: upstream side
FL2: downstream side
D: vortex
S: avoidance space
AC: parking actuator

### DETAILED DESCRIPTION OF THE EXEMPLARY EMBODIMENTS

The present disclosure relates to a vortex-induced vibration energy extraction device configured to extract electric energy from mechanical energy resulting from vortex-induced vibration of a vibrating body caused by a fluid flow. The vortex-induced vibration energy extraction device includes: a pair of vibrating bodies coupled to a support body installed on a seabed such that both ends thereof are coupled to both sides of the support body by shafts, respectively, the vibrating bodies being disposed along a straight line with regard to a flow direction of a fluid; and
an energy conversion device provided on the support body so as to convert mechanical energy resulting from vortex-inducted vibration of the vibrating bodies due to the flow of the fluid to electric energy, wherein
the vibrating body positioned upstream in the flow direction, with regard to the flow direction of the fluid, is configured to generate mechanical energy through vortex-induced vibration resulting from the flow of the upstream fluid, and the vibrating body positioned downstream in the flow direction is configured to generate mechanical energy through wake galloping caused by a vortex generated behind the vibrating body positioned upstream,
characterized in that the support body comprises a parked condition maintaining means configured to variably control the angle of the vibrating body with regard to the flow of the fluid, thereby stopping or minimizing the vortex-induced vibration of the vibrating body.

Hereinafter, exemplary embodiments of the present invention will be described in detail with reference to the accompanying drawings. In the following description of the present disclosure, descriptions of already-known functions or configurations will be omitted to clarify the gist of the present disclosure.

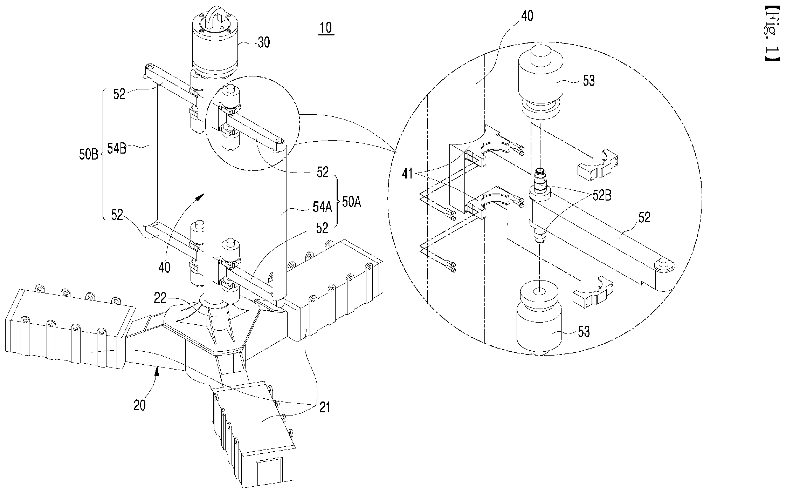

In the accompanying drawings, FIG. 1 is a perspective view illustrating a vortex-induced vibration energy extraction device according to the first embodiment of the present invention.

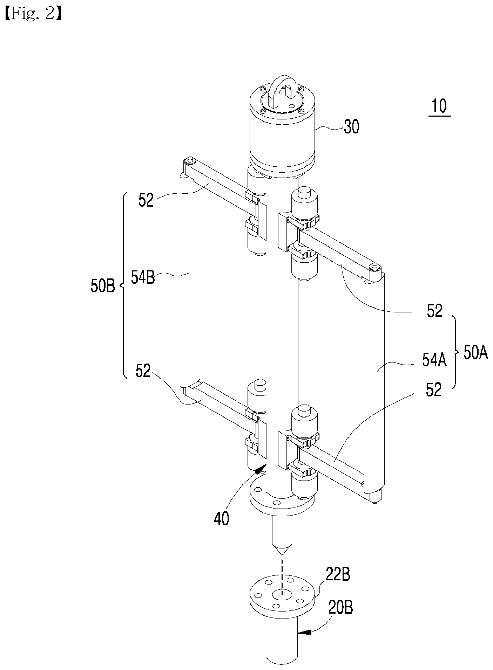

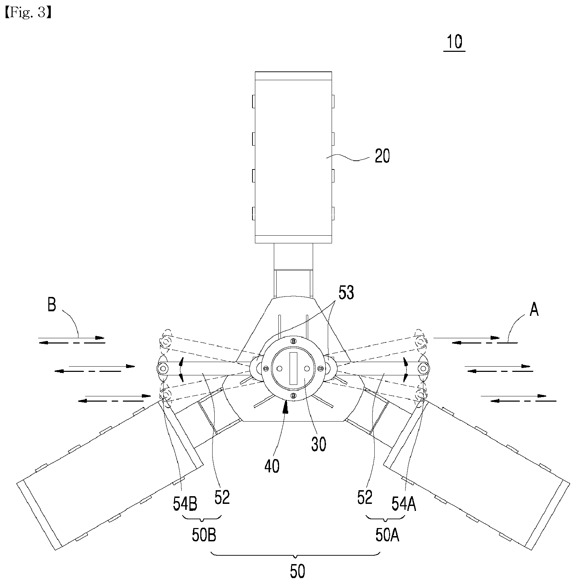

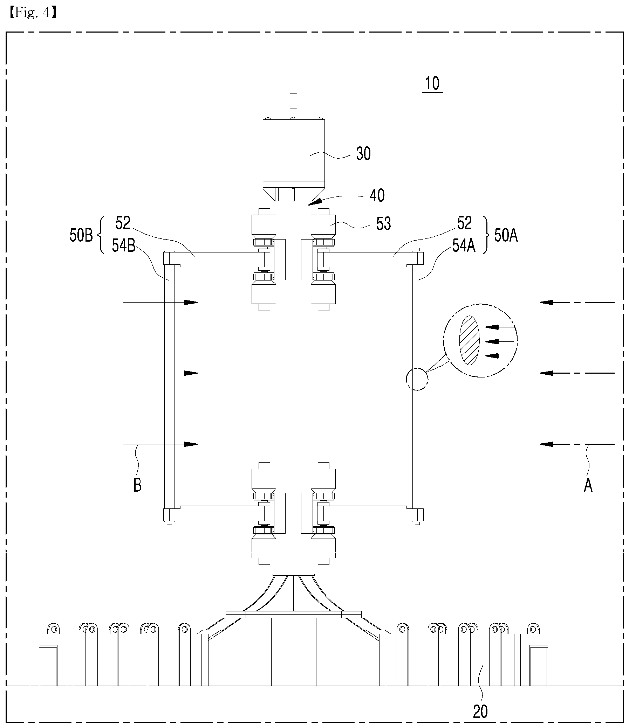

FIG. 2 is a perspective view illustrating another embodiment of the anchor body illustrated in FIG. 1. FIG. 3 is a top view for descripting the operation of the vortex-induced vibration energy extraction device illustrated in FIG. 1. FIG. 4 is a front view of the vortex-induced vibration energy extraction device illustrated in FIG. 1.

Hereinafter, flows of tidal currents or ocean currents resulting from flood tides and ebb tides will be referred to as "fluid flows".

As illustrated in FIG. 1 to FIG. 4, the vortex-induced vibration energy extraction device 10 according to the first embodiment of the present invention is configured to extract electric energy from mechanical energy resulting from vortex-induced vibration of vibrating bodies 54A and 54B due to a fluid flow. The vortex-induced vibration energy extraction device 10 includes: an anchor body 20 installed on a seabed; a support body 40 installed on the anchor body 20 and provided with a power generation means 30 for converting flow (vortex-induced vibration) energy to electric energy; and an operating unit 50 configured to deliver mechanical energy resulting from reciprocating rotational movements of the vibrating bodies 54 to the power generation means 30 through an energy conversion means.

The above-mentioned operating units 50 are installed on the support body 40 and positioned to be symmetrical or asymmetrical with each other with reference to the support body 40. The vibrating body 54A of the one-side operating unit 50A is configured to generate mechanical energy through vortex-induced vibration due to a fluid flow in one direction, and the vibrating body 54B of the opposite-side operating unit 50B is configured to generate mechanical energy through vortex-induced vibration due to a fluid flow in the opposite direction. That is, the operating units 50 have vibrating bodies 54A and 54B provided on both sides of the support body 40 and thus are structured to generate mechanical energy through vortex-induced vibration by means of fluid flows in various directions, including flood and ebb tides.

The vortex-induced vibration energy extraction device 10 will now be described in more detail.

The anchor body 20 installed on a seabed is for the purpose of stably supporting the support body 40 having operating units 50 installed thereon. The anchor body 20 may include three support blocks 21 made of concrete or metal and disposed at an angle of 120°, thereby supporting the support body 40. Each support block 21 has a coupling portion 22 formed at the center thereof such that the lower end of the support body 40 is coupled thereto. By configuring the anchor body 20 so as to include three support blocks 21 in this manner, the support body 40 can be supported more stably.

Meanwhile, as illustrated in FIG. 2, the anchor body 20 supporting the support body 40 may be made of a monopile 20B, but is not limited thereto, and may also be made of a gravity anchor or a pile anchor. When the anchor body 20 is made of a monopile 20B, the monopile 20B penetrates the seabed, and has a coupling portion 22B formed on the upper end thereof such that the lower end of the support body 40 is coupled thereto. By configuring the anchor body 20 to be made of a monopile 20B, the configuration of the anchor body 20 is simplified, thereby making it possible to construct the vortex-induced vibration energy extraction device 10 easily with low costs.

The support body 40 is vertically installed at the center of the anchor body 20, and has a power generation means 30 for converting mechanical energy resulting from vortex-induced vibration of respective vibrating bodies 54A and 54B to electric energy. The support body 40 has a mechanical configuration so as to support stable rotation of the operating units 50 and to deliver mechanical energy from respective vibrating bodies 54A and 54B, through conversion, to the power generation means 30. The support body 40 is a cylindrical structure configured to support stable rotations of the operating units 50. The support body 40 has a power generation means 30 provided on the upper end thereof, and has an energy conversion means embedded therein so as to convert mechanical energy resulting from respective operating units 50 to kinetic energy and to deliver the same to the power generation means 30 such that the same is converted to electric energy.

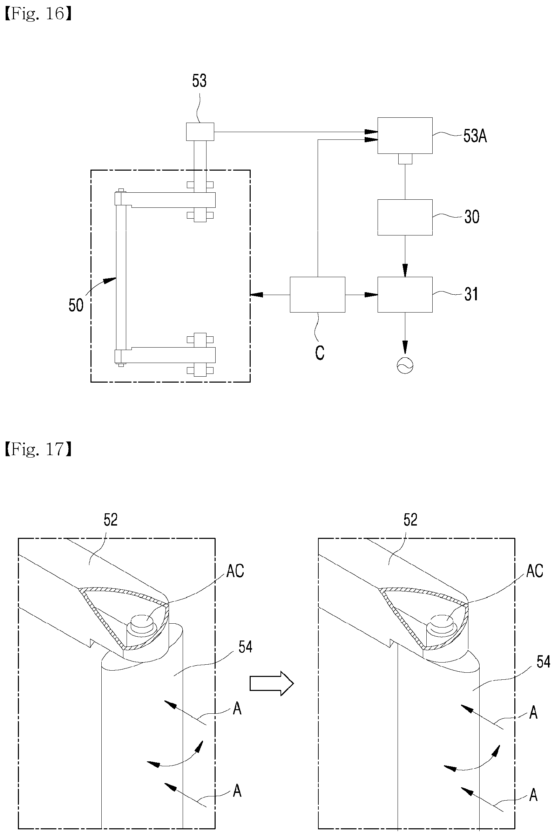

As illustrated in FIG. 16, the energy conversion means includes, for example, an energy conversion member 53 connected to shafts 52B of support racks 52 supporting the vibrating bodies 54A and 54B of the operating units 50, and a hydrostatic conversion device 53A for converting a hydraulic pressure generated by the energy conversion member 53 to a hydrostatic pressure. A hydraulic motor may be installed between the hydrostatic conversion device 53A and the generator 30, and the energy conversion member 53 may be made of a hydraulic pump. In addition, electricity produced by operating the turbine inside the generator 30 by means of the hydraulic pressure, which is converted to hydrostatic pressure by the hydrostatic conversion device 53A, is supplied to an electric power system through the power conversion device 31. Moreover, the operating units 50, the energy conversion member 53, the hydrostatic conversion device 53A, the power conversion device 31, and the like are controlled by a control unit C.

Meanwhile, although not illustrated in the drawings, the energy conversion means may include, for example, multiple driving gears and following gears connected to the shafts 52B of the support racks 52 so as to receive rotational power from the shafts 52B, and a turbine shaft of a generator 30 driven by the following gears. That is, the energy conversion means may be configured such that the turbine is rotated by rotational power from the shafts 52B.

The energy conversion means is not limited to the above-described embodiment, and may employ various means capable of converting kinetic energy to electric energy.

As described above, the energy conversion means may be configured variously so as to convert mechanical energy occurring in respective vibrating bodies 54A and 54B (reciprocating rotational movements) to rotational kinetic energy, and to deliver the same to the power generation means 30.

Meanwhile, the present embodiment will be described assuming that the power generation means 30 is provided at the upper end of the support body 40. However, this assumption is not limiting in any manner, and the power generation means may be provided on energy conversion members 53 connected to shafts 52B of support racks 52 supporting vibrating bodies 54A and 54B of operating units 50A and 50B. That is, as illustrated in FIG. 1, the other ends of the support racks 52 are rotatably coupled to the upper and lower portions of brackets 41, which are fixedly installed on the support body 40, by shafts 52B, and energy conversion means 53 are coupled to the upper and lower portions of the brackets 41, respectively. Although the power generation means may be provided on energy conversion members 53 having the above structure, the present embodiment will be described assuming that the power generation means 30 is provided at the upper end of the support body 40. In addition, the energy conversion member 53 may elastically support the shaft 52B, thereby controlling resonance of respective vibrating bodies 54A and 54B connected through the support racks 52. That is, although not illustrated in the drawings, the shafts 52B may have multiple springs installed thereon so as to control resonance of the vibrating bodies 54A and 54B. Such resonance control is widely known, and detailed description thereof will be omitted herein.

The operating units 50 are configured to include a pair of support racks 52 having one ends coupled to both ends of the vibrating bodies 54A and 54B on both sides, respectively, so as to rotate respective shafts 52B provided on the support body 40. That is, the shafts 52B are coupled both to the support racks 52 and to the support body 40 by brackets 41 such that mechanical energy resulting from reciprocating rotational movements (vortex-induced vibration) of respective vibrating bodies 54A and 54B is delivered to the power generation means 30 through the shafts 52B of the support racks 52.

The shafts 52B coupled to the support racks 52 rotate by means of the reciprocating rotational movements of respective vibrating bodies 54A and 54B, and the resulting rotational power is delivered to the power generation means 30 through the above-mentioned energy conversion means, and thus is converted to electric energy.

The operating units 50, configured as described above, are positioned to be symmetrical with each other with reference to the support body 40, as illustrated in FIG. 3. That is, the operating units 50 are disposed on both sides of the support body 40 such that the vibrating body 54A of the one-side operating unit 50 undergoes vortex-induced vibration by means of a tidal current in one direction A (fluid flow), thereby generating mechanical energy, and the vibrating body 54B of the opposite-side operating unit 50B undergoes vortex-induced vibration by means of a tidal current in the opposite direction B (fluid flow), thereby generating mechanical energy.

The operating units 50A and 50B symmetrically installed on both sides of the support body 40 operate in the following manner. For example, if a tidal current A (fluid flow) occurs in one direction due to a flood tide, the vibrating body 54A of the one-side operating unit 50A undergoes vortex-induced vibration by means of the tidal current in one direction A, thereby generating mechanical energy. In this process, after passing through the vibrating body 54A of the one-side operating unit 50A, the tidal current A in one direction acts on the vibrating body 54B of the opposite-side operating unit 50B, thereby causing the vibrating body 54B to undergo vortex-induced vibration.

In addition, if a tidal current B (fluid flow) occurs in the opposite direction due to an ebb tide, the vibrating body 54B of the opposite-side operating unit 50B undergoes vortex-induced vibration by means of the tidal current in the opposite direction B, thereby generating mechanical energy. In this process, after passing through the vibrating body 54B of the opposite-side operating unit 50B, the tidal current B in the opposite direction acts on the vibrating body 54A of the one-side operating unit 50A, thereby causing the vibrating body 54A to undergo vortex-induced vibration.

As such, even if tidal currents A and B occur in different directions due to flood and ebb tides, respective vibrating bodies 54A and 54B of respective operating units 50A and 50B on both sides of the support body 40 undergo vortex-induced vibrations corresponding to respective tidal currents A and B, making it possible to extract electric energy from the tidal currents A and B flowing in various directions.

To put it another way, with reference to the support body 40, the vibrating bodies 54A and 54B on both sides are disposed along a straight line with regard to the flow direction of the tidal current A or B, thereby causing the wake galloping phenomenon. Accordingly, the vortex-induced vibrations of respective vibrating bodies 54A and 54B may be maximized, and the power generation efficiency may improve. That is, a synergy effect may be caused by multiple vibrating bodies, thereby increasing the energy harvesting efficiency.

The wake galloping phenomenon occurring in the vortex-induced vibration energy extraction device 10 according to the present embodiment will now be described.

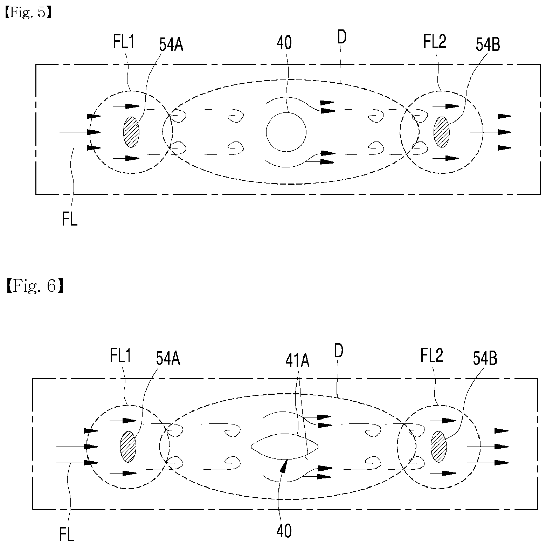

Among the accompanying drawings, FIG. 5 is a schematic top view for describing wake galloping that occurs in the vortex-induced vibration energy extraction device according to the present embodiment.

As illustrated in FIG. 5, vibrating bodies 54A and 54B are disposed symmetrically on both sides of the support body 40. If a fluid flow occurs due to a flood tide or an ebb tide, or if a fluid flow occurs in one direction only, the vibrating body 54A positioned upstream FL1 in the direct direction FL with regard to the fluid flow direction FL undergoes vortex-induced vibration by means of the upstream FL1 fluid flow, thereby generating mechanical energy (energy obtained by changing the pressure field to a reciprocating movement type). The vibrating body 54B positioned downstream FL2 in the flow direction FL causes wake galloping due to the vortex D generated behind the vibrating body 54A positioned upstream FL1, thereby generating mechanical energy. That is, the vibrating body 54B positioned downstream FL2 in the flow direction FL undergoes vortex-inducted vibration by means of the vortex D generated behind the vibrating body 54A positioned upstream FL1, thereby generating mechanical energy (energy obtained by changing the pressure field to a reciprocating movement type).

By disposing a pair of vibrating bodies 54A and 54B on both sides of the support body 40 in this manner, a fluid flow can generate mechanical energy through simultaneous vortex-induced vibration of the pair of vibrating bodies 54A and 54B, thereby substantially improving the power generation efficiency (energy extraction efficiency).

Among the accompanying drawings, FIG. 6 is a schematic top view for describing a vortex-induced vibration energy extraction device according to the second embodiment of the present disclosure.

As illustrated in FIG. 6, the vortex-induced vibration energy extraction device 10 according to the second embodiment has the same configuration as that of the above-described embodiment except that, with reference to the fluid flow direction FL, the support body 40 between the upstream vibrating body 54A and the downstream vibrating body 54B is formed in the shape of a streamlined thin plate, thereby forming an avoidance unit 41A, such that the fluid that has passed through the upstream FL1 vibrating body 54A is not interfered with before acting on the downstream FL2 vibrating body 54B.

As such, the support body 40 between the upstream vibrating body 54A and the downstream vibrating body 54B, specifically, the middle portion of the support body 40, is formed in the shape of a streamlined thin plate with reference to the fluid flow direction FL, thereby forming an avoidance unit 41A, such that interference can be minimized in connection with generation of a vortex behind the upstream vibrating body 54A.

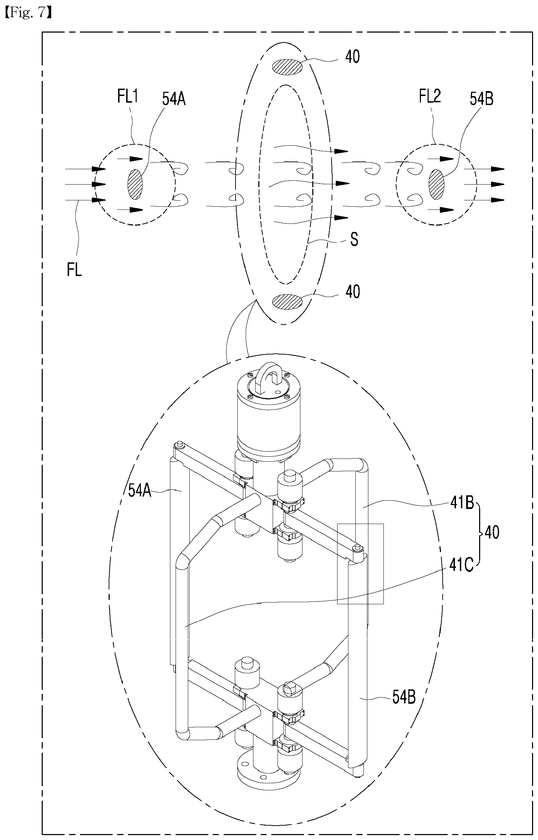

Among the accompanying drawings, FIG. 7 is a schematic top view for describing a vortex-induced vibration energy extraction device according to the third embodiment of the present disclosure.

As illustrated in FIG. 7, the vortex-induced vibration energy extraction device 10 according to the third embodiment has the same configuration as that of above-described respective embodiments except that the support body 40 between the upstream vibrating body 54A and the downstream vibrating body 54B has both sides formed in "]"-shapes, thereby forming an avoidance space S, such that the fluid that has passed through the upstream FL1 vibrating body 54A is not interfered with before acting on the downstream vibrating body 54B.

As such, the middle portion of the support body 40 is divided into both sides, and divided respective support portions 41B and 41C are formed in "]"-shapes, thereby forming an avoidance space S therebetween. Accordingly, the vortex generated in the course of passing through the upstream vibrating body 54A is not interfered with by the support body 40 before acting on the downstream vibrating body 54B, thereby facilitating the vortex-induced vibration of the downstream vibrating body 54B. In addition, generation of the vortex behind the upstream vibrating body 54A is not interfered with.

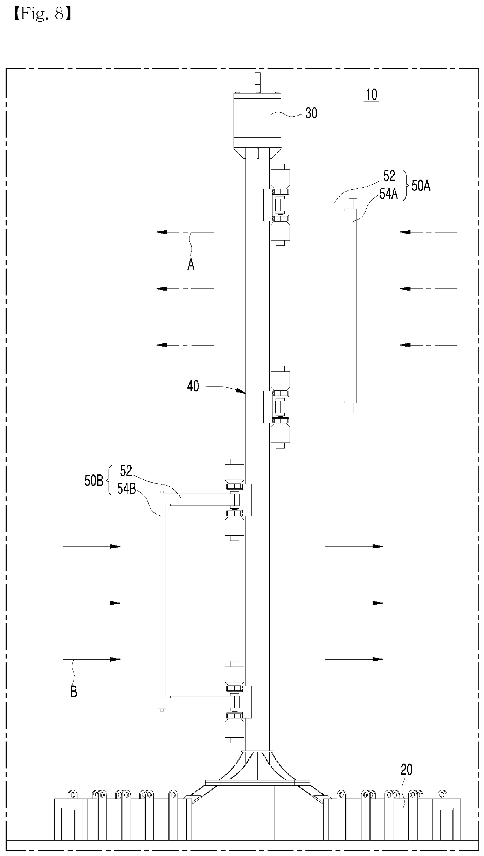

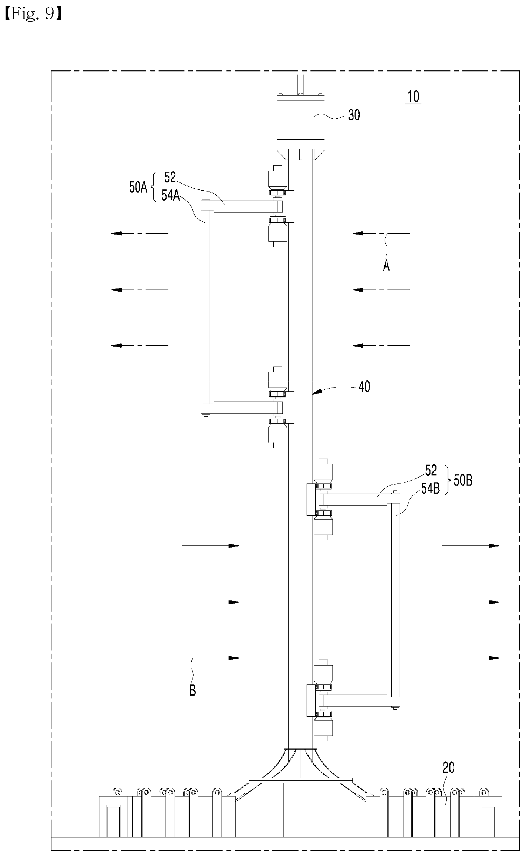

Among the accompanying drawings, FIG. 8 and FIG. 9 are front views illustrating a vortex-induced vibration energy extraction device according to the fourth embodiment of the present disclosure.

As illustrated in FIG. 8 and FIG. 9, in connection with the vortex-induced vibration energy extraction device 10 according to the fourth embodiment, both vibrating bodies 54A and 54B of respective operating units 50A and 50B may be disposed to deviate from each other in the upward/downward direction so as not to be affected by respective tidal currents A and B. That is, as illustrated in FIG. 8, among respective operating units 50A and 50B installed on both sides of the support body 40, one operating unit 50A is positioned is positioned on one-side upper portion, and the other operating unit 50B is positioned on the opposite-side lower portion, thereby deviating from each other. In contrast, as illustrated in FIG. 9, one operating unit 50A may be disposed on the lower portion, and the other operating unit 50B may be disposed on the upper portion.

While the two operating units 50A and 50B are disposed to deviate from each other in this manner, the tidal current A flowing in one direction directly acts on each of the vibrating body 54A of the operating unit 50A positioned on the front (upstream) and the vibrating body 54B of the operating unit 50B positioned on the rear (downstream) (with reference to the flow direction of the tidal current in one direction). In addition, the tidal current B flowing in the opposite direction directly acts on each of the vibrating body 54B of the operating unit 50B positioned on the opposite side and the vibrating body 54A of the operating unit 50A positioned on the rear side (with reference to the flow direction of the tidal current in the opposite direction).

Such an action occurs because the two operating units 50A and 50B are not positioned along a straight line, but are disposed to deviate from each other in the upward/downward direction. In addition, respective tidal currents A and B independently act on the vibrating bodies 54A and 54B on both sides, respectively, thereby causing efficient vortex-inducted vibrations of respective vibrating bodies 54A and 54B by means of the tidal currents A and B.

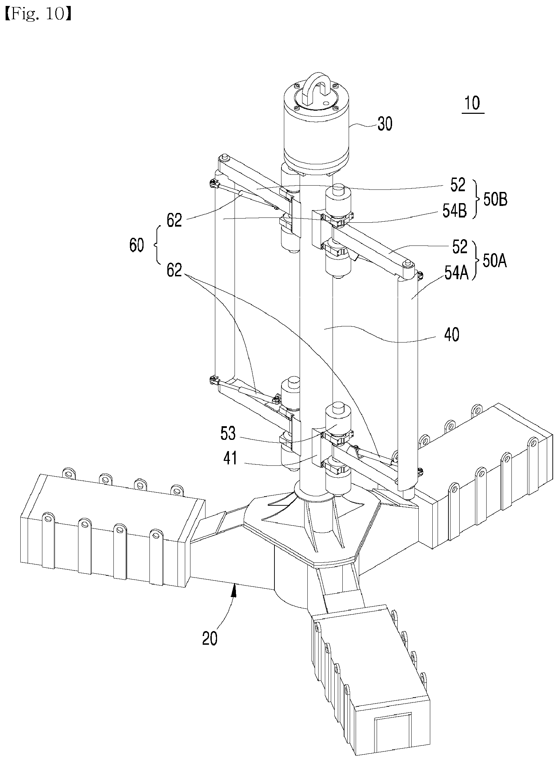

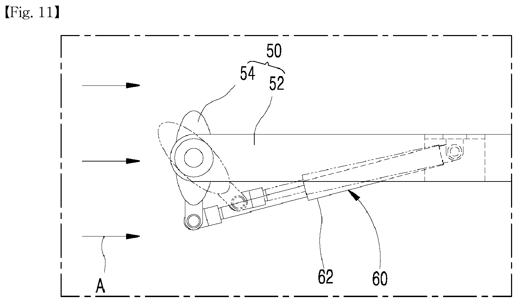

Among the accompanying drawings, FIG. 10 and FIG. 11 illustrate a vortex-induced vibration energy extraction device according to the fifth embodiment of the present disclosure. Specifically, FIG. 10 and FIG. 11 are a perspective view and a schematic top view illustrating a vortex-induced vibration energy extraction device having a rated power maintaining means such that the angle of vibrating bodies is varied by actuators.

As illustrated in FIG. 10 and FIG. 11, the vortex-induced vibration energy extraction device 10 according to the fifth embodiment has the same configuration as that of above-described respective embodiments except that the above-mentioned operating units 50 have rated power maintaining means 60 for variably controlling the angle of respective vibrating bodies 54A and 54B with regard to the flow of a tidal current A or variably controlling the shape of the vibrating bodies 54A and 54B, thereby maintaining rated power, and performing a parked condition maintaining function (function for preventing the vibrating bodies from receiving resistance such that the same do not make reciprocating movements).

The rated power maintaining means 60 include actuators 62 having one ends coupled to vibrating bodies 54A and 54B, both ends of which are coupled to respective support racks 52 by shafts, and having the other ends coupled to the support racks 52 such that, by pushing or pulling the vibrating bodies 54A and 54B through contracting/extending operations, the angle of the vibrating bodies 54A and 54B is varied (angle of the vibrating bodies with regard to the fluid flow direction).

To put it another way, as illustrated in FIG. 11, the actuator 62 may be operated to vary the angle of the vibrating body 54, which remains perpendicular to the flow direction of the tidal current A (fluid flow direction), such that the same slopes toward the flow direction of the tidal current A, thereby controlling the vortex-induced vibration of the vibrating body 54. That is, the largest vortex-inducted vibration (reciprocating rotational movement) occurs when the vibrating body 54 having an elliptical section remains perpendicular to the flow direction of the tidal current A (when the wide surface of the vibrating body faces the flow direction of the tidal current, as indicated by the solid line in FIG. 11). In addition, a small vortex-inducted vibration (low RPM or stop) occurs when the vibrating body 54 slopes toward the flow direction of the tidal current A (when the narrow surface of the vibrating body faces the flow direction of the tidal current, as indicated by the alternate long and short dash line in FIG. 11). Accordingly, by appropriately varying the angle of the vibrating body 54 with the actuator 62, the energy extraction efficiency of the operating unit 50 can be controlled (rated power is maintained) . In addition, the operating unit 50 may be parked and maintained in the parked condition for various reasons, including device maintenance/repair.

The above-mentioned parked condition maintaining function is for the purpose of operating the actuator 62 so as to vary the angle such that the wide surface of the vibrating body 54 faces the flow direction of the tidal current A, or to vary the angle such that the narrow surface of the vibrating body 54 faces the flow direction of the tidal current A, thereby stopping the vortex-induced vibration of the vibrating body 54 or reducing the same to a minimum level. The parked condition maintaining function is very useful when the vortex-induced vibration of the vibrating body 54 needs to be stopped during repair or in an emergency.

On the other hand, according to another embodiment as illustrated in FIG. 17, a parked condition maintaining means (function for preventing the vibrating body from receiving resistance such that the same does not make reciprocating movements) may be provided inside the support rack 52 so as to vary the angle of the vibrating body 54, thereby stopping or minimizing the reciprocating movement caused by the vortex-induced vibration of the vibrating body 54. The parked condition maintaining means includes a parking actuator AC, the operation of which is controlled by a control unit C. The parking actuator AC is installed inside the support rack 52 so as to rotate the shaft of the vibrating body 54. The parking actuator AC is directly coupled to the shaft that supports the vibrating body 54, inside the support rack 52, or is connected to the shaft by a power delivery means.

The parked condition maintaining means including the parking actuator AC configured as above is for the purpose of stopping or minimizing the reciprocating movement resulting from the vortex-induced vibration of the vibrating body 54 during repair or in an emergency.

The operation of the above-mentioned parked condition maintaining means will now be described.

If the parking actuator AC is operated by the control unit C so as to vary the angle of the vibrating body 54 such that the wide surface of the vibrating body 54 faces the flow direction of the tidal current A as illustrated in FIG. 17, the tidal current A acts on the wide surface of the vibrating body 54, and the largest reciprocating rotational movement occurs due to the vortex-induced vibration of the vibrating body 54. Thereafter, if the parking actuator AC is operated by the control unit C so as to vary the angle of the vibrating body 54 such that the narrow surface of the vibrating body 54 faces the flow direction of the tidal current A as illustrated in FIG. 17, the vortex-induced vibration of the vibrating body 54 is minimized or removed. This is because the tidal current A acts in a small area on the vibrating body 54. As such, the parking actuator AC varies the angle of the vibrating body 54 such that the narrow surface of the vibrating body 54 faces the fluid flow direction, thereby stopping the vortex-induced vibration of the vibrating body 54 or reducing the same to a minimum level. Consequently, the parked condition of the vibrating body 54 can be maintained.

It is also possible to perform the function of the rated power maintaining means 60 described above, by appropriately controlling the parking actuator AC with the control unit C.

Accordingly, by adjusting the angle of the vibrating body 54 with the actuator 62 or the parking actuator AC, the energy extraction efficiency of the operating unit 50 can be controlled (rated power is maintained). In addition, the operating unit 50 may be parked and maintained in the parked condition for various reasons, including repair and emergency.

The above-mentioned actuator 62 may be variously configured by a hydraulic vibrating body, a pneumatic vibrating body or a step motor.

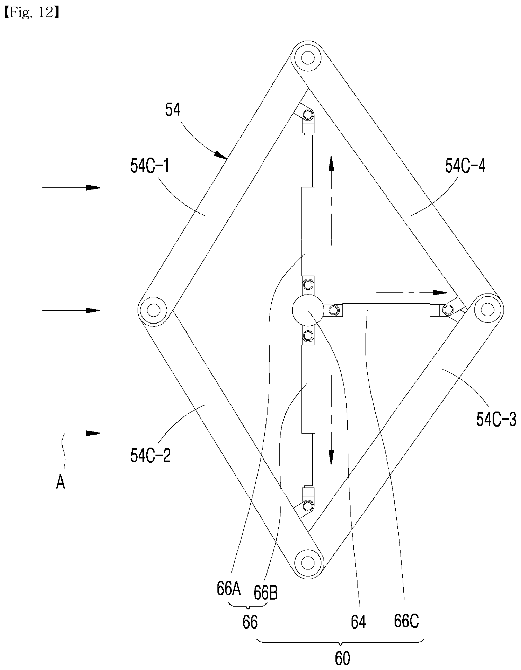

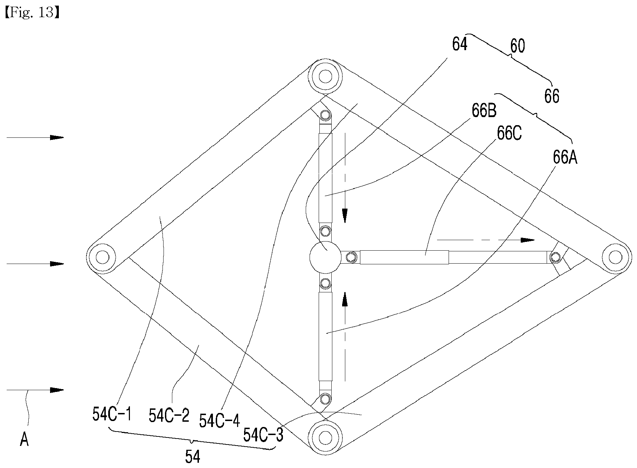

Among the accompanying drawings, FIG. 12 and FIG. 13 are front views illustrating a vortex-induced vibration energy extraction device according to the sixth embodiment of the present disclosure, which has a rated power maintaining means, wherein the cross section of the vibrating body is varied by multiple actuators.

As illustrated in FIG. 12 and FIG. 13, the vortex-induced vibration energy extraction device 10 according to the sixth embodiment has the same configuration as that of above-described respective embodiments except that respective operating units 50A and 50B have rated power maintaining means 60 such that the sectional shape of respective vibrating bodies 54 is variably controlled.

To be specific, the rated power maintaining means 60 of the vortex-induced vibration energy extraction device 10 according to the sixth embodiment includes multiple first, second, third, and fourth vibrating body pieces 54C-1, 54C02, 54C-3, and 54C-4 formed by dividing a vibrating body 54 in the longitudinal direction and disposed such that the vibrating body 54 has a polygonal cross section, respective ends of the vibrating body pieces being axially coupled and connected to each other. A support platform 64 is installed in the longitudinal direction inside the first, second, third, and fourth vibrating body pieces 54C-1, 54C-2, 54C-3, and 54C-4. The rated power maintaining means includes first and second shape-changing actuators 66A and 66B, respective one ends of which are coupled to the insides of the first and second vibrating body pieces 54C-1 and 54C-2, and respective other ends of which are coupled to the support platform 64, such that the first and second shape-changing actuators 66A and 66B extend or contract so as to unfold or fold both sides of the first and second vibrating body pieces 54C-1 and 54C-2. The rated power maintaining means includes a third shape-changing actuator 66C which contracts when the first and second shape-changing actuators 66A and 66B extend, thereby pulling the third and fourth vibrating body pieces 54C-3 and 54C-4 toward the support platform 64. The third shape-changing actuator 66C extends when the first and second shape-changing actuators 66A and 66B contract, thereby pushing the third and fourth vibrating body pieces 54C-3 and 54C-4 away from the support platform 64. The first, second, and third shape-changing actuators 66A, 66B, and 66C constitute an actuator unit 66.

The rated power maintaining means 60 having the above structure can vary the cross sectional shape of the vibrating body 54 by unfolding or folding the first, second, third, and fourth vibrating body pieces 54C-1, 54C-2, 54C-3, and 54C-4, which are separated from each other, and which are axially coupled to be folded on each other, by the first, second, and third shape-changing actuators 66A, 66B, and 66C. Accordingly, the surface area in which the tidal current A acts perpendicularly to the vibrating body 54 can be increased or decreased. That is, the larger the surface area in which the tidal current A acts perpendicularly to the vibrating body 54, the larger vortex-induced vibration occurs. Consequently, the vortex-induced vibration may be reduced or removed by decreasing the surface area in which the tidal current A acts perpendicularly to the vibrating body 54.

As such, by varying the cross-sectional shape of the vibrating body 54, the rated power can be controlled, and the vortex-induced vibration of the vibrating body 54 can be stopped or reduced to a minimum level.

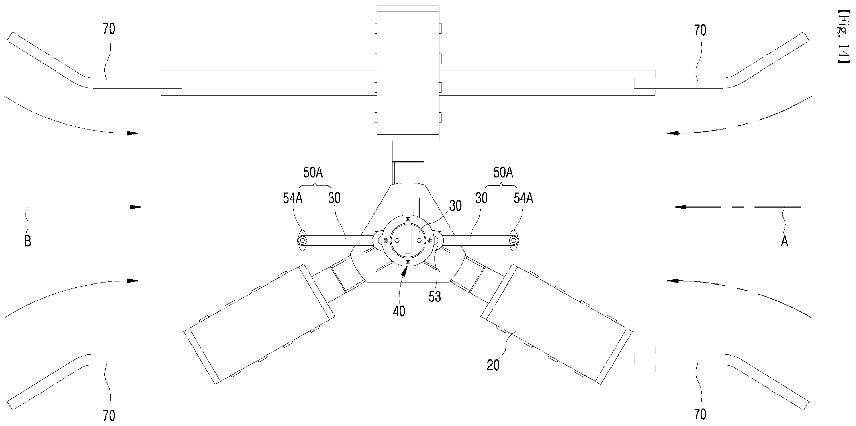

Among the accompanying drawings, FIG. 14 is a schematic top view illustrating a vortex-induced vibration energy extraction device according to the seventh embodiment of the present disclosure.

As illustrated in FIG. 14, the vortex-induced vibration energy extraction device 10 according to the seventh embodiment has the same configuration as that of above-described respective embodiments except that a tidal current inducing structure 70 is installed on the anchor body 20 or near the anchor body 20 so as to induce a flow of a tidal current A formed by floor and ebb tides in a direction matching with that of operating units 50A and 50B on both sides.

By installing a tidal current inducing structure 70 on the anchor body 20 or near the anchor body 20 so as to induce a flow of tidal currents A and B formed by floor and ebb tides toward the operating units 50A and 50B on both sides, the tidal currents A and B efficiently act on respective vibrating bodies 54A and 54B on both sides, thereby improving the energy extraction efficiency.

The tidal current inducing structure 70 preferably has a curved portion and has a height equal to the height of respective vibrating bodies 54A and 54B from the seabed.

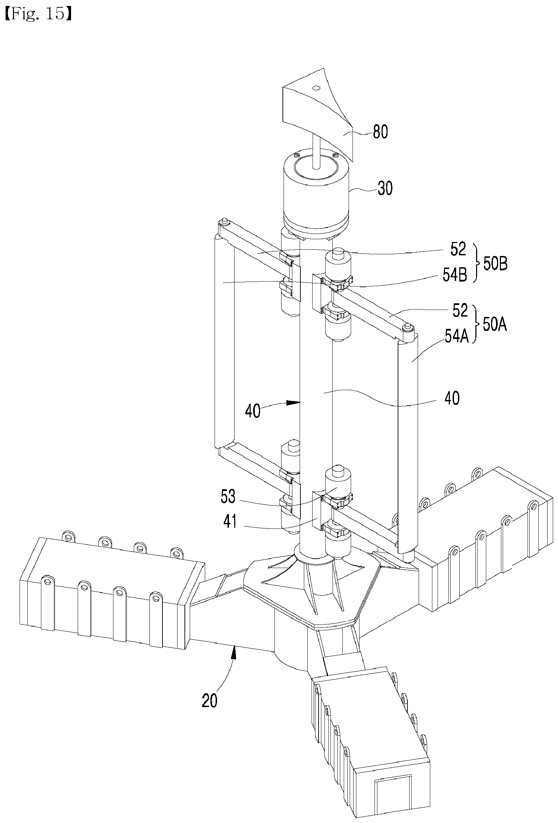

FIG. 15 is a schematic perspective view illustrating a vortex-induced vibration energy extraction device according to the eighth embodiment of the present disclosure.

As illustrated in FIG. 15, the vortex-induced vibration energy extraction device 10 according to the eighth embodiment has the same configuration as that of above-described respective embodiments except that a direction change member 80 is provided on the upper end of the support body 40 or on the upper end of the power generation means 30.

The direction change member 80 is configured such that the support body 40, which has operating units 50A and 50B on both sides thereof, can change the direction of the operating unit 50A or 50B in the flow direction of the tidal current A or B. That is, the lower end of the support body 40 is rotatably coupled to the anchor body 20, and a direction change member 80 having a triangular shape is coupled to the upper end of the power generation means 30. Accordingly, if a tidal current A or B flows (if a fluid flows), the support body 40 rotates such that one vibrating body 54A or 54B changes the position so as to face the flow direction of the tidal current A or B, thereby enabling respective vibrating bodies 54A and 54B to undergo vortex-induced vibrations by means of the tidal current A or B.

The direction change member 80 enables the operating units 50A and 50B on both sides to actively scope with the tidal current A or B flowing in various directions, thereby extracting energy.

### Industrial Applicability

The vortex-induced vibration energy extraction device according to the present disclosure is configured to extract electric energy from mechanical energy resulting from vortex-induced vibration of the vibrating body, which is caused by a fluid flow. Multiple vibrating bodies are configured and are installed on both sides of the support body, respectively. The one-side vibrating body undergoes is configured to generate mechanical energy through vortex-induced vibration by means of a fluid flowing in one direction, and the opposite-side vibrating body is configured to generate mechanical energy through vortex-induced vibration by means of a fluid flowing in the opposite direction. Particularly, when the vibrating body positioned upstream in the flow direction with regard to the fluid flow direction generates mechanical energy through vortex-induced vibration resulting from the upstream fluid flow, the vibrating body positioned downstream generates mechanical energy by means of wake galloping resulting from the vortex generated behind the vibrating positioned upstream, thereby substantially improving the energy extraction efficiency. Accordingly, the vortex-induced vibration energy extraction device according to the present disclosure can be installed in waters having a large tidal range and a fast tidal current, thereby producing environment-friendly energy, and thus is industrially applicable.

## Claims

1. A vortex-induced vibration energy extraction device (10) comprising:
a pair of vibrating bodies (54A, 54B) coupled to a support body (40) installed on a seabed such that both ends thereof are coupled to both sides of the support body (40) by shafts, respectively, the vibrating bodies (54A, 54B) being disposed along a straight line with regard to a flow direction of a fluid; and
an energy conversion device provided on the support body (40) so as to convert mechanical energy resulting from vortex-inducted vibration of the vibrating bodies (54A, 54B) due to the flow of the fluid to electric energy, wherein
the vibrating body (54A) positioned upstream in the flow direction, with regard to the flow direction of the fluid, is configured to generate mechanical energy through vortex-induced vibration resulting from the flow of the upstream fluid, and the vibrating body (54B) positioned downstream in the flow direction is configured to generate mechanical energy through wake galloping caused by a vortex generated behind the vibrating body (54A) positioned upstream,
**characterized in that** the support body (40) comprises a parked condition maintaining means configured to variably control the angle of the vibrating body (54A, 54B) with regard to the flow of the fluid, thereby stopping or minimizing the vortex-induced vibration of the vibrating body (54A, 54B).

2. The vortex-induced vibration energy extraction device (10) of claim 1, wherein the support body (40) is coupled to an anchor body (20) comprising three support blocks disposed at an angle of 120°, or to an anchor body comprising a monopile, a gravity anchor, or a pile anchor.

3. The vortex-induced vibration energy extraction device (10) of claim 1, wherein the support body (40) between the upstream vibrating body (54A) and the downstream vibrating body (54B) has both sides formed in "]"-shapes, thereby forming an avoidance space (S), such that the fluid that has passed through the upstream vibrating body (54A) is not interfered with before acting on the downstream vibrating body (54B) .

4. The vortex-induced vibration energy extraction device (10) of claim 1, wherein the support body (40) between the upstream vibrating body (54A) and the downstream vibrating body (54B) is formed in the shape of a streamlined thin plate, thereby forming an avoidance portion (41A), such that the fluid that has passed through the upstream vibrating body (54A) is not interfered with before acting on the downstream vibrating body (54B).

5. The vortex-induced vibration energy extraction device (10) of claim 1, wherein a tidal current inducing structure (70) is installed near the support body (40) so as to induce a flow of a fluid, comprising a tidal current or an ocean current resulting from a flood tide or an ebb tide, in a direction matching with respective vibrating bodies (54A, 54B) on both sides.

6. The vortex-induced vibration energy extraction device (10) of claim 1, wherein the support body (40) comprises a rated power maintaining means (60) configured to variably control the angle of the vibrating body (54A, 54B) with regard to the flow of the fluid, to variably control the shape of the vibrating body (54A. 54B), thereby maintaining rated power, or to stop the vortex-induced vibration of the vibrating body (54A, 54B).

7. The vortex-induced vibration energy extraction device (10) of claim 6, wherein the rated power maintaining means (60) comprises an actuator (62) having one end coupled to the vibrating body (54A, 54B) and the other end coupled to support racks (52) that couple the vibrating body (54A, 54B) to a shaft so as to push or pull the vibrating body (54A, 54B) through contracting/extending operations, thereby varying the angle of the vibrating body (54A, 54B).

8. The vortex-induced vibration energy extraction device (10) of claim 6, wherein the rated power maintaining means (60) is configured to vary the cross-sectional shape of the vibrating body (54A, 54B) and comprises:
multiple first, second, third, and fourth vibrating body pieces (54C-1, 54C-2, 54C-3, 54C-4) formed by dividing the vibrating body (54A, 54B) in the longitudinal direction, and disposed such that the vibrating body (54A, 54B) has a polygonal cross-sectional shape, respective ends of the first, second, third, and fourth vibrating body pieces (54C-1, 54C-2, 54C-3, 54C-4) being axially coupled and connected to each other;
a support platform (64) installed in the longitudinal direction inside the first, second, third, and fourth vibrating body pieces (54C-1, 54C-2, 54C-3, 54C-4); and
an actuator unit (66) comprising first, second, and third shape-changing actuators (66A, 66B, 66C), wherein respective one ends of the first and second shape-changing actuators (66A, 66B) are coupled to the inside of the first and second vibrating body pieces (54C-1, 54C-2), and respective other ends thereof are coupled to the support platform (64) such that the first and second shape-changing actuators (66A, 66B) extend and contract so as to unfold or fold both sides of the first and second vibrating body pieces (54C-1, 54C-2); the third shape-changing actuator (66C) is configured to contract when the first and second shape-changing actuators (66A, 66B) extend, thereby pulling the third and fourth vibrating body pieces (54C-3, 54C-4) toward the support platform (64); and the third shape-changing actuator (66C) is configured to extend when the first and second shape-changing actuators (66A, 66B) contract, thereby pushing the third and fourth vibrating body pieces (54C-3, 54C-4) away from the support platform (64).

9. The vortex-induced vibration energy extraction device (10) of claim 1, wherein the parked condition maintaining means comprises a parking actuator (AC) installed on a shaft of the vibrating body (54A, 54B) inside support racks (52) so as to vary the angle of the vibrating body (54A, 54B), operation of the parking actuator (AC) being controlled by a control unit (C).

## Patentansprüche

1. Extraktionsvorrichtung (10) für wirbelinduzierte Schwingungsenergie, die Folgendes umfasst:
ein Paar schwingende Körper (54A, 54B), die an einen Tragkörper (40), der an einem Meeresboden installiert ist, gekoppelt sind, derart, dass ihre beiden Enden durch Wellen entsprechend an beide Seiten des Tragkörpers (40) gekoppelt sind, wobei die schwingenden Körper (54A, 54B) entlang einer Gerade in Bezug auf eine Durchflussrichtung eines Fluids angeordnet sind; und
eine Energieumsetzvorrichtung, die am Tragkörper (40) vorgesehen ist, um mechanische Energie, die aus einer wirbelinduzierten Schwingung der schwingenden Körper (54A, 54B) aufgrund des Stroms des Fluids resultiert, in elektrische Energie umzusetzen, wobei
der schwingende Körper (54A), der stromaufseitig in der Strömungsrichtung in Bezug auf die Durchflussrichtung des Fluids positioniert ist, konfiguriert ist, über eine wirbelinduzierte Schwingung, die aus dem Strom des stromaufseitigen Fluids resultiert, mechanische Energie zu erzeugen, und der schwingende Körper (54B), der stromabseitig in der Strömungsrichtung positioniert ist, konfiguriert ist, durch Schleppgaloppieren, das durch einen Wirbel erzeugt wird, der hinter dem schwingenden Körper (54A), der stromaufseitig positioniert ist, verursacht wird, mechanische Energie zu erzeugen,
**dadurch gekennzeichnet, dass** der Tragkörper (40) ein Parkzustandshaltemittel umfasst, das konfiguriert ist, den Winkel des schwingenden Körpers (54A, 54B) in Bezug auf den Strom des Fluids veränderbar zu steuern und dadurch die wirbelinduzierte Schwingung des schwingenden Körpers (54A, 54B) zu stoppen oder zu minimieren.

2. Extraktionsvorrichtung (10) für wirbelinduzierte Schwingungsenergie nach Anspruch 1, wobei der Tragkörper (40) an einen Ankerkörper (20), der drei Trägerblöcke, die in einem Winkel von 120° angeordnet sind, umfasst, oder an einen Ankerkörper, der einen Monopfahl, einen Schwerkraftanker oder einen Pfahlanker umfasst, gekoppelt ist.

3. Extraktionsvorrichtung (10) für wirbelinduzierte Schwingungsenergie nach Anspruch 1, wobei beide Seiten des Tragkörpers (40) zwischen dem stromaufseitigen schwingenden Körper (54A) und dem stromabseitigen schwingenden Körper (54B) in "]"-Formen gebildet sind, wodurch ein Ausweichraum (S) derart gebildet wird, dass das Fluid, das den stromaufseitigen schwingenden Körper (54A) durchlaufen hat, nicht gestört wird, bevor es auf den stromabseitigen schwingenden Körper (54B) wirkt.

4. Extraktionsvorrichtung (10) für wirbelinduzierte Schwingungsenergie nach Anspruch 1, wobei der Tragkörper (40) zwischen dem stromaufseitigen schwingenden Körper (54A) und dem stromabseitigen schwingenden Körper (54B) in Form einer stromlinienförmigen dünnen Platte gebildet ist, wodurch ein Ausweichabschnitt (41A) gebildet wird, derart, dass das Fluid, das den stromaufseitigen schwingenden Körper (54A) durchlaufen hat, nicht gestört wird, bevor es auf den stromabseitigen schwingenden Körper (54B) wirkt.

5. Extraktionsvorrichtung (10) für wirbelinduzierte Schwingungsenergie nach Anspruch 1, wobei eine Gezeitenströmungseinleitungsstruktur (70) in der Nähe des Tragkörpers (40) installiert ist, um einen Strom eines Fluids, der eine Gezeitenströmung oder eine Meeresströmung, die aus einer Flutströmung oder einer Ebbeströmung resultiert, umfasst, in einer Richtung, die mit jeweiligen schwingenden Körpern (54A, 54B) auf beiden Seiten übereinstimmt, einzuleiten.

6. Extraktionsvorrichtung (10) für wirbelinduzierte Schwingungsenergie nach Anspruch 1, wobei der Tragkörper (40) ein Nennleistungsaufrechterhaltungsmittel (60) umfasst, das konfiguriert ist, den Winkel des schwingenden Körpers (54A, 54B) in Bezug auf den Strom des Fluids veränderbar zu steuern, die Form des schwingenden Körpers (54A, 54B) veränderbar zu steuern, wodurch eine Nennleistung aufrechterhalten wird, oder die wirbelinduzierte Schwingung des schwingenden Körpers (54A, 54B) zu stoppen.

7. Extraktionsvorrichtung (10) für wirbelinduzierte Schwingungsenergie nach Anspruch 6, wobei das Nennleistungsaufrechterhaltungsmittel (60) einen Aktor (62), der ein Ende, das an den schwingenden Körper (54A, 54B) gekoppelt ist, und das andere Ende, das an Traggestelle (52) gekoppelt ist, die den schwingenden Körper (54A, 54B) an eine Welle koppeln, besitzt, umfasst, um den schwingenden Körper (54A, 54B) durch Zusammenzieh-/Ausdehnoperationen zu drücken oder zu ziehen, wodurch der Winkel des schwingenden Körpers (54A, 54B) variiert wird.

8. Extraktionsvorrichtung (10) für wirbelinduzierte Schwingungsenergie nach Anspruch 6, wobei das Nennleistungsaufrechterhaltungsmittel (60) konfiguriert ist, die Querschnittform des schwingenden Körpers (54A, 54B) zu variieren, und Folgendes umfasst:
mehrere erste, zweite, dritte und vierte Stücke (54C-1, 54C-2, 54C-3, 54C-4) eines schwingenden Körpers, die durch Unterteilen des schwingenden Körpers (54A, 54B) in der Längsrichtung gebildet sind und derart angeordnet sind, dass der schwingende Körper (54A, 54B) eine polygonale Querschnittform besitzt, wobei jeweilige Enden des ersten, des zweiten, des dritten und des vierten Stücks (54C-1, 54C-2, 54C-3, 54C-4) eines schwingenden Körpers axial gekoppelt und miteinander verbunden sind;
eine Trägerplattform (64), die in der Längsrichtung in dem ersten, dem zweiten, dem dritten und dem vierten Stück (54C-1, 54C-2, 54C-3, 54C-4) eines schwingenden Körpers installiert ist; und
eine Aktoreinheit (66), die einen ersten, einen zweiten und einen dritten formverändernden Aktor (66A, 66B, 66C) umfasst, wobei jeweilige eine Enden des ersten und des zweiten formverändernden Aktors (66A, 66B) an die Innenseite des ersten und des zweiten Stück eines schwingenden Körpers (54C-1, 54C-2) gekoppelt sind und jeweilige weitere Enden davon an die Trägerplattform (64) gekoppelt sind, derart, dass der erste und der zweite formverändernde Aktor (66A, 66B) sich ausdehnen und zusammenziehen, um beide Seiten des ersten und des zweiten Stück eines schwingenden Körpers (54C-1, 54C-2) auszuklappen oder einzuklappen; der dritte formverändernde Aktor (66C) konfiguriert ist, sich zusammenzuziehen, wenn der erste und der zweite formverändernde Aktor (66A, 66B) sich ausdehnen, wodurch das dritte und das vierte Stück eines schwingenden Körpers (54C-3, 54C-4) zur Trägerplattform (64) gezogen werden; und der dritte formverändernde Aktor (66C) konfiguriert ist, sich auszudehnen, wenn der erste und der zweite formverändernde Aktor (66A, 66B) sich zusammenziehen, wodurch das dritte und das vierte Stück eines schwingenden Körpers (54C-3, 54C-4) von der Trägerplattform (64) weg gedrückt werden.

9. Extraktionsvorrichtung (10) für wirbelinduzierte Schwingungsenergie nach Anspruch 1, wobei das Parkzustandshaltemittel einen Parkaktor (AC) umfasst, der an einer Welle des schwingenden Körpers (54A, 54B) in Traggestellen (52) installiert ist, um den Winkel des schwingenden Körpers (54A, 54B) zu variieren, und der Betrieb des Parkaktors (AC) durch eine Steuereinheit (C) gesteuert wird.

## Revendications

1. Dispositif (10) d'extraction d'énergie de vibration induite par vortex, comprenant :
une paire de corps vibrants (54A, 54B) accouplés à un corps support (40) installé sur un fond marin de telle sorte que leurs deux extrémités soient accouplées respectivement aux deux côtés du corps support (40) par des arbres, les corps vibrants (54A, 54B) étant placés suivant une ligne droite par rapport à une direction d'écoulement d'un fluide ; et
un dispositif de conversion d'énergie agencé sur le corps support (40) de manière à convertir en énergie électrique l'énergie mécanique résultant de la vibration induite par vortex des corps vibrants (54A, 54B) due à l'écoulement du fluide,
le corps vibrant (54A) positionné en amont dans la direction d'écoulement, par rapport à la direction d'écoulement du fluide, étant configuré pour générer de l'énergie mécanique à partir de la vibration induite par vortex résultant de l'écoulement du fluide en amont, et le corps vibrant (54B) positionné en aval dans la direction d'écoulement étant configuré pour générer de l'énergie mécanique à partir du galop de sillage engendré par un vortex généré derrière le corps vibrant (54A) positionné en amont,
**caractérisé en ce que** le corps support (40) comprend un moyen de maintien à l'état de repos configuré pour commander de manière variable l'angle du corps vibrant (54A, 54B) par rapport à l'écoulement du fluide, pour ainsi interrompre ou minimiser la vibration induite par vortex du corps vibrant (54A, 54B).

2. Dispositif (10) d'extraction d'énergie de vibration induite par vortex selon la revendication 1, dans lequel le corps support (40) est accouplé à un corps d'ancrage (20) comprenant trois blocs supports placés à un angle de 120°, ou à un corps d'ancrage comprenant un monopieu, un ancrage par gravité ou un ancrage sur pieu.

3. Dispositif (10) d'extraction d'énergie de vibration induite par vortex selon la revendication 1, dans lequel le corps support (40) entre le corps vibrant (54A) en amont et le corps vibrant (54B) en aval a ses deux côtés dotés de formes en "]", pour ainsi ménager un espace d'évitement (S), de sorte à ne pas entraver le fluide qui est passé à travers le corps vibrant (54A) en amont avant qu'il n'agisse sur le corps vibrant (54B) en aval.

4. Dispositif (10) d'extraction d'énergie de vibration induite par vortex selon la revendication 1, dans lequel le corps support (40) entre le corps vibrant (54A) en amont et le corps vibrant (54B) en aval prend la forme d'une plaque mince fuselée, pour ainsi former une partie d'évitement (41A), de sorte à ne pas entraver le fluide qui est passé à travers le corps vibrant (54A) en amont avant qu'il n'agisse sur le corps vibrant (54B) en aval.

5. Dispositif (10) d'extraction d'énergie de vibration induite par vortex selon la revendication 1, dans lequel une structure (70) engendrant un courant de marée est installée à proximité du corps support (40) de manière à engendrer un écoulement d'un fluide, comprenant un courant de marée ou un courant océanique résultant d'une marée montante ou d'une marée descendante, dans une direction cohérente avec les corps vibrants (54A, 54B) respectifs des deux côtés.

6. Dispositif (10) d'extraction d'énergie de vibration induite par vortex selon la revendication 1, dans lequel le corps support (40) comprend un moyen (60) de maintien de puissance nominale configuré pour commander de manière variable l'angle du corps vibrant (54A, 54B) par rapport à l'écoulement du fluide, pour commander de manière variable la forme du corps vibrant (54A, 54B), pour ainsi maintenir la puissance nominale, ou pour interrompre la vibration induite par vortex du corps vibrant (54A, 54B).

7. Dispositif (10) d'extraction d'énergie de vibration induite par vortex selon la revendication 6, dans lequel le moyen (60) de maintien de puissance nominale comprend un actionneur (62) dont une extrémité est accouplée au corps vibrant (54A, 54B) et dont l'autre extrémité est accouplée à des châssis supports (52) qui accouplent le corps vibrant (54A, 54B) à un arbre de manière à pousser ou tirer le corps vibrant (54A, 54B) par des actions de de raccourcissement/allongement, pour ainsi faire varier l'angle du corps vibrant (54A, 54B).

8. Dispositif (10) d'extraction d'énergie de vibration induite par vortex selon la revendication 6, dans lequel le moyen (60) de maintien de puissance nominale est configuré pour faire varier la forme en section transversale du corps vibrant (54A, 54B) et comprend :
des multiples premier, deuxième, troisième et quatrième éléments de corps vibrant (54C-1, 54C-2, 54C-3, 54C-4) formés en divisant le corps vibrant (54A, 54B) dans la direction longitudinale, et placés de sorte à conférer une forme polygonale en section transversale au corps vibrant (54A, 54B), des extrémités respectives des premier, deuxième, troisième et quatrième éléments de corps vibrant (54C-1, 54C-2, 54C-3, 54C-4) étant axialement accouplées et reliées entre elles ;
une plateforme support (64) installée dans la direction longitudinale à l'intérieur des premier, deuxième, troisième et quatrième éléments de corps vibrant (54C-1, 54C-2, 54C-3, 54C-4) ; et
une unité d'actionnement (66) comprenant des premier, deuxième, troisième et quatrième actionneurs de changement de forme (66A, 66B, 66C), des extrémités respectives des premier et deuxième actionneurs de changement de forme (66A, 66B) étant accouplées à l'intérieur des premier et deuxième éléments de corps vibrant (54C-1, 54C-2) et d'autres extrémités respectives de ceux-ci étant accouplées à la plateforme support (64) de sorte que les premier et deuxième actionneurs de changement de forme (66A, 66B) s'allongent et se raccourcissent de manière à déplier ou plier les deux côtés des premier et deuxième éléments de corps vibrant (54C-1, 54C-2) ; le troisième actionneur de changement de forme (66C) étant configuré pour se raccourcir lorsque les premier et deuxième actionneurs de changement de forme (66A, 66B) s'allongent, pour ainsi tirer les troisième et quatrième éléments de corps vibrant (54C-3, 54C-4) vers la plateforme support (64) ; et le troisième actionneur de changement de forme (66C) étant configuré pour s'allonger lorsque les premier et deuxième actionneurs de changement de forme (66A, 66B) se raccourcissent, pour ainsi pousser les troisième et quatrième éléments de corps vibrant (54C-3, 54C-4) à l'écart de la plateforme support (64).

9. Dispositif (10) d'extraction d'énergie de vibration induite par vortex selon la revendication 1, dans lequel le moyen de maintien à l'état de repos comprend un actionneur de mise au repos (AC) installé sur un arbre du corps vibrant (54A, 54B) à l'intérieur de châssis supports (52) de manière à faire varier l'angle du corps vibrant (54A, 54B), le fonctionnement de l'actionneur de mise au repos (AC) étant commandé par une unité de commande (C).
